# EUROPEAN PATENT SPECIFICATION

(11) **EP 2 354 924 B1**
(45) Date of publication and mention of the grant of the patent: **12.06.2013**
(21) Application number: 10188456.7
(22) Date of filing: 22.10.2010
(51) Int. Cl.: H04L 12/24

(54) **Method for persisting software objects**
Verfahren zum Persistieren von Softwareobjekten
Procédé pour rendre persistants des objets logiciels

(30) Priority: 27.01.2010 EP 10151801
(43) Date of publication of application: 10.08.2011
(73) Proprietor: Ricoh Company, Ltd, Ohta-ku Tokyo 143-8555 (JP)
(72) Inventor: Skvirski, Alexei, 40472 Düsseldorf (DE)
(74) Representative: Schwabe - Sandmair - Marx

(56) References cited:
- EP-A1- 2 056 222
- WO-A1-03/077142
- SCHMIDT A ET AL: "Efficient relational storage and retrieval of XML documents", WORLD WIDE WEB AND DATABASES. THIRD INTERNATIONAL WORKSHOP WEBDB 2000 (LECTURE NOTES IN COMPUTER SCIENCE VOL.1997) SPRINGER-VERLAG BERLIN, GERMANY, 18 May 2000 (2000-05-18), pages 137-150, XP002634188, ISBN: 3-540-41826-1

## Description

The present invention generally relates to object oriented software languages and more specifically to a method and a system for storing software objects to be persistently held in a computer memory according to claim 1 and 5, respectively

In accordance with the prior art, a local system or a distributed system of devices has to be controlled and maintained. The devices can be office machines such as printers, copiers, facsimile devices and so on, or also - in view of the upcoming "electronic household" - devices such as refrigerators, washing machines, TVs, mobile phones and the like. These different devices have to be accessed through other entities such as for example personal computers or servers, or sometimes directly.

If a system includes a large number of for instance printers of various types with various features, these printers may be represented through many different data models and/or classes included in these models. Since the data related to these printers have to comply with their various models, the data to be stored in a system cache of the system server which will have to be stored in a database will rarely comply with the storage schema of the database. This problem renders the storing and retrieving of data related to many different data models in a usual data base almost impossible, because of their inflexible table structure.

As another example of such a device data one might think about wide variety of both digital electronic (i.e. devices which already provide, or rather, possess any kinds of intrinsic information in the format easily recognisable for the modern electronic age - machine readable digital format) as well as digitally-aware devices, whereas the latter represent the kind of devices which posses the informational content being made easy to digitize. This type of devices may contain, for example some optical, mechanical and other data which easily allows being measured, evaluated and converted into a machine-readable electronic format.

In such local or distributed systems of devices a large amount of device-specific data has to be stored, wherein different kinds of devices by different manufacturers provide different data or different data formats which have to be collected by a system server and maintained as software objects. However, the object representations have to be transmitted regularly to a database for long-term storing purposes. While the office devices, household devices or the like included in the system can change with respect to their type, manufacturer, capabilities and so forth, the database structure is usually very rigid, such that the system has limited flexibility alone because of the fixed storage structure of its database, which in particular prevents the system from being supplemented with different devices such as office machines, household devices and the like which are manufactured and distributed by different companies.

Object oriented programming methods are commonly used in modem programming practice. These methods attempt to mirror the real world by using "object" abstractions of real world entities, whereby "physical" objects are identified and certain functionality is associated with each object. Similarly, relational database systems (RDBMS) attempt to capture the real world as a collection of interrelated data arranged in rows and columns. However, relational database systems do not provide adequate handling of object models. Therefore, an intermediate layer of translating software (middleware) is required. Already existing software methods performing translation (software frameworks) between object models and relational databases provide slow performance on complex data queries and lack support of data model changes that do not make use of complex and unsafe database schema migration procedures.

A data model therefore can bee seen as a logic representation (reflection) of the real world objects into software entities, wherein possible constraints may be imposed on them. Also potential relationships among the objects may have to be considered. Any possible change in the structure of a real world object will then necessarily require an appropriate variation in its respective logical representation, together with any possible dependencies/interactions between the objects, i.e. the devices represented by their software entities. This may also be called domain object to domain model translation. Therefore any new approximation of the real world reality with purely ideal, logical domain objects would inevitably result in the creation of an appropriate logical data model which adequately describes the domain objects and their mutual behaviour. Important is that a) domain objects must be adequate enough to the real world counterparts, and b) the domain model built on the domain objects is complete to be able to represent all the accountable phenomena. Thus, an every new iteration of the process has to be treated as a data model change and requires a specific handling.

Usually, databases use very rigid data storing schemes which cannot be adapted to the changing needs of a network which is arbitrarily changed, in particular with respect to the system components included in it. In particular, if a system is based on object-orientated programming (OOP), the systems of the OOP objects of this system are not very critical since the OOP model does not specifically define the scope of domain objects and their mutual coherency.

On the other hand, relational database management system (RDBMS) schemes are based on a data domain model which has to comply with very rigid and predefined storage schemes. Accordingly, the specific features of OOP systems and databases operating on the basis of relational database management systems are not compatible (see for example Darwen, Hugh; Date, C. J. (March 1995) "The Third Manifesto"; ACM SIGMOD Record (New York, NY, USA: ACM Press) 24 (1): 39-49). In order to deal with this incompatibility, a class of object-relational mapping methods (ORM methods) has been developed, to support a large number of short and data-independent transactions, also called orthogonal transactions. This approach is suitable for supporting many different relational database management system schemes through the use of standard Java JDBC technology.

JDBC stands for Java Database Connectivity protocol and is defined for the Java programming language, starting from Java 2 Platform, Standard Edition, version 1.1 (J2SE). This protocol defines a standard means of a client/server communication between RDBMS and Java application used for executing RDBMS data queries from a Java application. However, ORM methods have the shortcoming that very complex data queries are necessary for accessing and searching purposes, which slows down the system as a whole and means that a change in data model is not possible without the risk of losing data or causing the whole database system to break down.

WO 03/077142 A1 pertains to a method and system to process a domain modeled with one or more domain models.

EP 2 056 222 A1 pertains to a method of performing an operation on an XML database.

Schmidt A; et al.: "Efficient relational storage and retrieval of XML documents", WORLD WIDE WEB AND DATABASES. THIRD INTERNATIONAL WORKSHOP WEBDB 2000 (LECTURE NOTES IN COMPUTER SCIENCE VOL.1997) SPRINGER-VERLAG BERLIN, GERMANY / PROCEEDINGS WEBDB 2000, 20000518 - ISBN 978-3-540-41826-9 ; ISBN 3-540-41826-1 pertains to a method for relational storage and retrieval of XML documents.

The present invention is defined by the subject-matter of the appended claims.

It is an object of the present invention to provide a software framework with the ability to flexibly writing data relating to software objects, to support data changes flexibly and to retrieve software objects from RDBMS data rapidly.

It is a preferred object of the present invention to improve the transfer of data representing software objects to a data base, and to load data from a data base back into an object representation, using a variety of data formats.

It is a particular object of the present invention to increase the flexibility of the interaction between a system based on a domain model including a number of objects (devices), the system being controlled by a server maintaining software objects.

These objects are solved at least in part by the subject-matter of the independent claims. The features specified in the dependent claims provide advantages and should also be inventive in combination with the features of the independent claims.

Of course, the present invention is also directed to a computer program product and a data recording or storing medium including the steps of the method and enabling the system of the present invention to be run in accordance with the method of the present invention.

In accordance with the following, the figures listed below are briefly explained:
- Figure 1: shows a general structure of meta schema of an object;
- Figure 2: shows a schema-based XML persistence with a single name space repository;
- Figure 3: shows a schema-based XML persistence with a multiple name space repository;
- Figure 4: shows an exemplary RDBMS implementation of XML data storage of a printer device;
- Figure 5: shows a Unified Modelling Language (UML) sequence diagram of a data storing phase; and
- Figure 6: shows a UML sequence diagram of a data retrieving process.

In accordance with the invention a flexible structure is provided for storing data, representing software objects in a database and retrieving data in a data base and from a data base, respectively. In this context, a computer system comprising a cache can also be used to access the data base for storing and retrieving purposes, as it has been disclosed in contemporary applications of the same applicant.

An embodiment of the present invention recent is based on recent progress in the XML data technology as used in modem RDBMS schemes. It utilizes the ability of Java, as a byte-code virtual machine-executable language, to create an XML description from an object instance, and to assemble an object instance from its XML description during run time (""on the fly""). The proposed invention uses a schema-based XML storage of the data representing software objects in a single XML-type column of a database. The data stored in a binary format, and the stored data are not "shredded", i.e. not decomposed, into relational tables.

There are a limited number of methods for storing the XML datatypes inside of relational database. The structured data can be a) written as an unstructured character string, b) parsed and decomposed into smaller pieces to be stored into a set of auxiliary tables and, ultimately, c) saved "as it is" as a preparsed binary graph. The latter method ensures the best performance by data manipulation and allows for a maximum flexibility, albeit it is the most cumbersome method considering its technical implementation. This method requires a sort of non-relational superset to the relational data type system, which superset should be treated as atomic (so-called XML data type). The ancient method does not require a "data shredding" either, however, it does not intrinsically allow for the same speed and versatility of data manipulation (it is evident, that the whole data chunk (string) needs to be read / updated in case of any data manipulation. The known standard method of employing auxiliary tables requires additional "data shredding" as well as "data assembling" from/to the auxiliary tables where the pieces of the structured XML data are stored.

Java objects can be treated as simple DAG (directed acyclic graph) structures, also known as "trees", since the Java language does not allow multiple inheritance. XML, as a data modelling meta-language, provides comfortable means for manipulating data "trees" in a fast and efficient way. The present invention proposes using an XML namespace syntactic element as a descriptor in an associative storage model. XML namespaces are used for providing uniquely named elements and attributes in an XML document.

According to the standard definition of an XML namespace, taken from the W3C Recommendation Document (Namespaces in XML 1.0, 8 December 2009) XML namespace is a special mechanism used to "...avoid clashes between names from different markup vocabularies..." That is, it becomes more clear now that, based on this standard implementation, it is possible to rely on the XML namespace syntactic element ( being an XML tag) as the unique selector (or, otherwise called a "descriptor") to the whole set of the alike elements ( other XML namespace descriptors). The XML namespace thus uniquely determines the scope of the Java class entity. The relationship between XML namespace and the Java class name will be given elsewhere in the present disclosure.

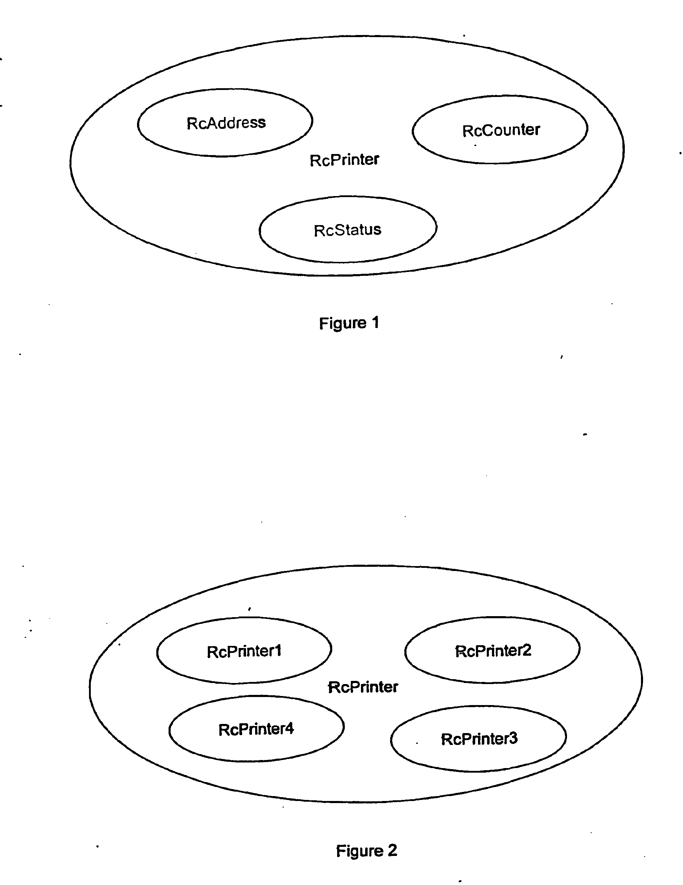

Please also note that Fig.1 has no relationship to this matter whatsoever.

The main core of the invention resides on the idea that Java object metadata being converted outside the RDBMS data space into a W3C XML schema document (XSD document). W3C document of December 2001 defines the "XML Schema" language (XSD) as one of possible XML schema descriptive languages which "...can be used to express a set of rules to which an XML document must conform in order to be considered 'valid'. According to this schema, a schema is an abstract collection of metadata". In other words, an XSD document can be treated as an instruction set of rules (or master plan) which the XML document should satisfy to be treated as having a logical sense to become a valid document, in comparison with the "well-formed" document state which only requires the document to be syntactically correct.

The XSD document has to be built according to the "Russian doll" principle, i.e. all the variable parts are enclosed in a host schema, which thus comprises a so-called object "meta-schema". In the particular example given in Figure 1, an object instance of the RePrinter class consists of three other object instances of the RcAddress, RcCounter and RcStatus classes, respectively. Therefore, the object class structure of the object class of RcPrinter as a whole is adequately represented as a composition of other object classes.

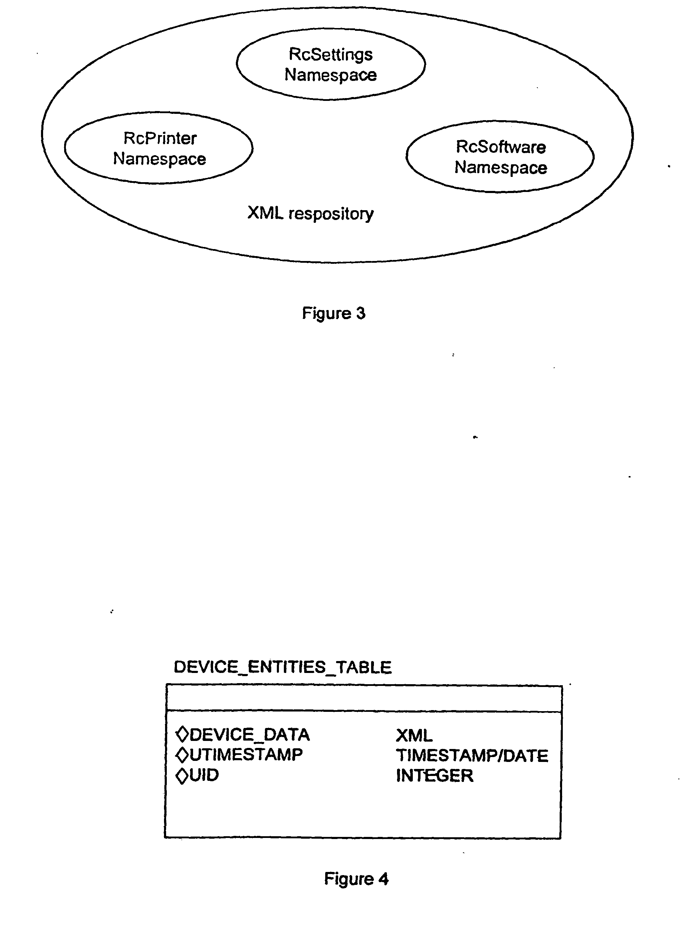

Each object class model can be uniquely represented by the XSD XML schema. As can be seen in Figure 2, each object instance of the object class is represented as an XML instance based on corresponding XSD schema. XML instances of the same class (which are equivalent to object instances) are stored within the same XML namespace repository, whereas instances of different object classes (in the form of XML instances) (see Figure 3) have to be stored with reference to different XML namespaces.

There is a one-to-one association between Java object instance and XML instance.

There is a one-to-one association between XML namespace and the Java class instance as well. However, object instances of the same class instance are building up a many-to-one association, therefore one can talk about using one XML namespace for the many object instances of the same class instance. The XML namespace is uniquely defined by the XSD schema. Accordingly, it is to be noted that object instances are not stored, but equivalent XML instances.

Some important aspects of this embodiment are as follows:
1. all the Java classes' metadata will have an adequate XSD schema ("meta-schema" collection);
2. a "meta-schema" is created by the Java developer and consists of one or more XSD schemata having a fixed structure;
3. all structural information is encapsulated in one and only one "meta-schema" for Java classes of one kind, i.e. there is a strict one-to-one relationship between the "meta-schema" XML namespace instance and the Java class.
4. all Java objects are stored and retrieved in the form of corresponding XML instances, built on XSD schemata; there is a strict one-to-one relationship between Java object and an XML instance.

In order to store and retrieve a plurality of data from printer devices, for instance, the RDBMS table structure according to Figure 4 is proposed. As can be seen from this figure, all data of a plurality of printing devices, for instance, are kept in a single XML-type RDBMS table column DEVICE_DATA. This column can also be indexed using RDBMS-specific indexing mechanisms in order to facilitate faster data retrieval. The remaining UTIMESTAMP and UID fields are necessary in order to provide the options of searching by time and device ID. These are ordinary RDBMS implementation-specific fields.

The persistence framework for representing software objects proposed by the invention can be logically split into two phases, namely a data storing phase and a data retrieving phase.

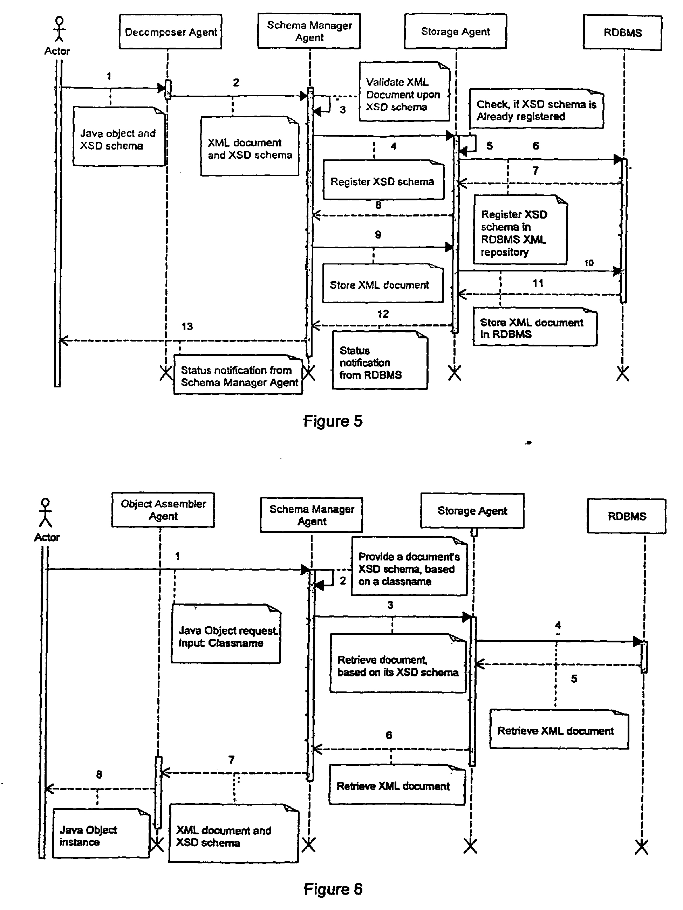

As shown in the Unified Modelling Language (UML) sequence diagram of Figure 5, in the data storage phase the Java class instances (Java objects) are decomposed into XML instance information by means of a document structure definition comprised in an XML Schema Document (XSD file) and data fields (read from the Java object) by an object decomposer. This can be any known Java implementation of a code generator (JAXB, for example)

JAXB is the Java Architecture for XML Binding (JAXB). It allows Java developers to map Java classes to XML representations. JAXB provides two main features: the ability to marshal, i.e. convert, Java objects into XML and the inverse, i.e. to unmarshal, i.e. reconvert, XML back into Java objects.

The XML schema manager agent validates the XML schema information and is responsible for data communication with the XML storage agent which provides an XML data manipulation interface to the destination RDBMS.

In detail, Figure 5 shows a workflow of a data storing process depicted by the UML sequence diagram which is comprised of several sequences (phases) given by sequential numbers from 1 to 13. Each arrow-like continuous line depicts a transition of information from one part of a system to another (or, otherwise, a system's action), with the dashed arrow-like lines representing the system's replies to the executed actions (i.e., reaction).

At the phase number or reference number 1, the Java class instances (Java objects) together with the appropriate XSD schema description document are decomposed by the Decomposer Agent into the XML instance information means of a document structure definition included in an XML Schema Document (XSD file) created by a Java developer and data fields (read from the Java object) by an object decomposer. This can be conducted by any known Java implementation of a code generator (JAXB, for example).

Then, at the reference number 2, the prepared XML instance together with the XSD schema document is transmitted to the Schema Manager Agent which executes their validation (reference number 3) and subsequent registration in the Storage agent (reference number 4).

The Storage Agent, after having checked its repository (reference number 5) initiates the XSD schema document registration in the RDBMS repository (steps or reference numbers 6 and 7). This step may be obviated if the XSD schema document has already been registered in its internal repository.

Having received a positive notification from the Storage Agent (reference number 8), the Schema Manager starts to execute its XML instance storage action (reference number 9), which includes the Storage Agent action (reference number 10) and the RDBMS reaction (reference number 11).

In case a of successful execution of RDBMS storing process, the RDBMS reaction at reference number 11 will be positive, thus triggering the subsequent notification sequenced from the Storage Agent to the first Schema Manager (reference number 12) and, subsequently, to the storage request initiator (action Actor) at reference number 13.

Afterward, the storing process is finished at this stage.

As shown in the UML sequence diagram of Figure 6, the Java object assembler agent is used to provide direct Java byte-code manipulation in order to recreate a Java object from a stored XML instances and XSD schema description, and data are retrieved and validated by the XML storage agent and XSD schema manager, respectively. Any known Java byte-code manipulation method implementations can be used.

These are so called Java virtual machine byte code assemblers which allow direct creation of Java language objects (instances of classes) from human readable source files, e.g. Jasmin (jasmine.sourceforge.net)

The workflow of a data retrieving process according to Figure 6 is depicted by this UML sequence diagram. Each arrow-like and continuous line represents a transition of information from one part of a system to another (or, otherwise, a system's action). The dashed arrow-like lines represent the system's replies to the executed actions (or, reaction).

At the reference number 1, the action Actor issues a request to retrieve a Java object to be communicated to the Schema Manager; the Java class name is sent as a key parameter.

The Schema Manager, at reference number 2, provides the proper XSD document based on the supplied Java class information. For the sake of simplicity, the decision process for the XSD schema document retrieval is omitted from the current UML description. However, it has to be considered that the Schema Manager Agent possesses the required information either in its internal repository or it can issue an appropriate request to the Storage Manager to retrieve the required information from the RDBMS repository.

After the required XSD schema document has been retrieved, the Schema Manager sends a request to the Storage Agent (reference number 3) for retrieving the XML instances which correspond to the selected XSD schema document, to the RDBMS (see reference numbers 4 and 5).

The Storage Agent passes the retrieved XML instances back to the Schema Manager (reference number 6).

The Schema Manager transmits the XML instances together with XSD schema document received from the Storage Agent to the Object Assembly Agent (reference number 7).

The Object Assembly Agent executes all necessary steps to recreate the Java object from the XML instances and XSD schema description. Any known Java byte-code manipulation method implementations can be used. These are so called Java virtual machine byte code assemblers which allow direct creation of Java language objects (instances of classes) from human readable source files, e.g. Jasmin (jasmine.sourceforge.net).

The Object Assembly Agent finally sends the finalised Java object back to the request originator (Actor) at the phase or reference number 8.

The retrieving process is considered finished at this stage.

In summary, in accordance with the present invention, it is possible to allow for the persistency of Java objects with their corresponding data in a database, which is particularly advantageous because, while it is easy to change Java models, the databases are inflexible and cannot be adapted to the changing Java models. Since it is possible to convert Java objects placed in the pre-structure of a cache memory device of a system server, in particular a JBass^{™} cache memory device into a XML structure in the format of a binary storage structure, pre-based Java objects can be stored as they are without shredding the pre-based Java objects.

In other words, Java objects can be converted into XML documents. Thus, the present invention allows storage of several models in one document format. Many documents can be stored in the same name space.

In addition, it is suitable to add at least one further data for searching purposes. For example, a time stamp has been proven to be a suitable search criterion. In this connection, the time stamp can be related to a time when the real world object related to the software-related Java object thereof has been entered and/or altered for the last time.

Accordingly, the present invention allows to persistently store objects and the retrieve these objects in and from the database, respectively.

Furthermore, it has to be noted that the present invention allows that the objects can be stored in only one table for all Java objects and their related classes.

The table can consist of an ID which is stored for example in the server and as a reference in the database to serve a supporter to find out a particular XML document which corresponds to a Java object of a device in the real world. The pre-based JPA framework can be replaced by the XML-framework through conversion by using the XSD schema. Finally, the XML document can be stored binary in the database to persist the relevant data.

Accordingly, in case data from server stored in the cache of this server, for example, in a JBass^{™} cache, have to be persisted, the server assigns an ID and a time stamp to the relevant data. The relevant data may consist of a Java object representing a real world device. The ID, the time stamp and the Java object are treated in that a Java object is converted into an XML document and the resulting data are send to the database to be stored for example in a table having three columns, one for the ID, the second one for time stamp and the third one for the XML document. Thus, due to the possibility to store this information in a binary format, it is very easy to store and retrieve this data on the basis of the ID and the time stamp as all the columns of the table contain RDBMS-searchable data. Accordingly, the present invention allows storage and retrieval of data to and from the database, respectively, "on the fly".

Advantages of the invention:
1. it allows flexible relational data management (persistence) for Java objects without having to rebuild the Java data model of the application (data manipulation "on the fly");
2. the data writing performance depends far less or not at all on the complexity of the application data model, since in accordance with the proposed invention, it is neither needed to create/modify database tables for the each new change of the Java object model, nor it is not necessary to decompose ("to shredder") the Java objects into a set of the auxiliary tables;
3. the data retrieving performance depends far less or not at all on the complexity of the application data model, since in accordance with the proposed invention, it is not necessary to generate complex SQL queries using JOIN operations, though it does depend on the implementation of the XML technology by the RDBMS chosen (as it is built upon usage of XML binary data type internal storage);
4. it already uses the implemented mechanism of structured XML-type schema-bound binary storage, as provided by recent RDBMS implementations (for example, Oracle 11g, MS SQL2008), which is a way of storing XML data which does not require "data shredding", i.e. decomposition, into relational tables, because the data are kept in a binary representation format. This dramatically reduces the XML data manipulation time and eliminates excessive XML parsing.

## Claims

1. A method for storing data relating to entities of an object orientated domain model in a database comprising a relational database management system, RDBMS, the method comprising the steps of:
receiving a source object comprising an instance of a Java class and a source markup schema, generating in a destination markup language document comprising an XML document XML instance information and data fields read from the source object, referred to as destination data, based on the received source object and source markup schema,
storing destination data comprising the destination markup language document in association with the source markup schema in a database,
wherein source objects of one class correspond to markup schemata sharing one and only one XML namespace, thereby providing a one-to-one correspondence between source object class and XML namespace.

2. The method according to the preceding claim, wherein XML documents are stored as XML instance converted into a binary format to be stored in the database.

3. The method according to any one of the preceding claims wherein the source markup schema comprises XML Schema (XSD) information.

4. The method according to the preceding claim, wherein all destination data related to a source object is represented in a single column of the RDBMS.

5. A system for storing data relating to entities of an object orientated domain model in a database comprising a relational database management system, RDBMS, the system comprising:
means for receiving a source object comprising an instance of a Java class and a source markup schema,
means for generating in a destination markup language document comprising an XML document XML instance information and data fields read from the source object, referred to as destination data, based on the receivable source object and source markup schema,
means for storing destination data comprising the destination markup language document in association with the source markup schema in a database,
wherein
source objects of one class corresponding to markup schemata sharing one and only one XML namespace, thereby providing a one-to-one correspondence between source object class and
XML namespace.

6. The system of claim 5, wherein the system is configured to conduct the steps set forth in at least one of claims 1 to 4.

## Patentansprüche

1. Verfahren zum Speichern von Daten, die sich auf Entitäten eines objektorientierten Domänenmodells in einer Datenbank, die ein relationales Datenbankmanagementsystem, RDBMS, umfasst, beziehen, wobei das Verfahren die Schritte umfasst:
Empfangen eines Quellobjektes, das eine Instanz einer Java-Klasse und ein Quellauszeichnungsschema umfasst,
Erzeugen von XML-Instanzinformationen und Datenfeldern, die aus dem Quellobjekt gelesen werden und die auf der Basis des empfangenen Quellobjekts und eines Quellauszeichnungsschemas als Zieldaten bezeichnet werden, in einem Zieldokument einer Auszeichnungssprache, das ein XML-Dokument umfasst,
Speichern der Zieldaten, die das Zieldokument einer Auszeichnungssprache in Verbindung mit dem Quellauszeichnungsschema umfassen, in einer Datenbank,
wobei Quellobjekte von einer Klasse Auszeichnungsschemata entsprechen, die einen und nur einen XML-Namensraum gemeinsam nutzen, wodurch sie eine eindeutige Beziehung zwischen Quellobjektklasse und XML-Namensraum liefern.

2. Verfahren nach dem vorhergehenden Anspruch, wobei XML-Dokumente als XML-Instanz gespeichert werden, die in ein binäres Format umgewandelt werden, um in der Datenbank gespeichert zu werden.

3. Verfahren nach einem der vorhergehenden Ansprüche, wobei das Quellauszeichnungsschema XML-Schemainformationen (XSD-Informationen) umfasst.

4. Verfahren nach dem vorhergehenden Anspruch, wobei alle Zieldaten, die auf ein Quellobjekt bezogen sind, in einer einzigen Spalte der RDBMS dargestellt sind.

5. System zum Speichern von Daten, die sich auf Entitäten eines objektorientierten Domänenmodells in einer Datenbank, die ein relationales Datenbankmanagementsystem, RDBMS, umfasst, beziehen, wobei das System die Schritte umfasst:
Mittel zum Empfangen eines Quellobjektes, das eine Instanz einer Java-Klasse und ein Quellauszeichnungsschema umfasst,
Mittel zum Erzeugen von XML-Instanzinformationen und Datenfeldern, die aus dem Quellobjekt gelesen werden und die auf der Basis des empfangenen Quellobjekts und eines Quellauszeichnungsschemas als Zieldaten bezeichnet werden, in einem Zieldokument einer Auszeichnungssprache, das ein XML-Dokument umfasst,
Mittel zum Speichern der Zieldaten, die das Zieldokument einer Auszeichnungssprache in Verbindung mit dem Quellauszeichnungsschema umfassen, in einer Datenbank,
wobei
Quellobjekte von einer Klasse Auszeichnungsschemata entsprechen, die einen und nur einen XML-Namensraum gemeinsam nutzen, wodurch sie eine eindeutige Beziehung zwischen Quellobjektklasse und XML-Namensraum liefern.

6. System nach Anspruch 5, wobei das System konfiguriert ist, die in mindestens einem der Ansprüche 1 bis 4 dargelegten Schritte auszuführen.

## Revendications

1. Procédé pour stocker des données relatives à des entités d'un modèle de domaine orienté objet dans une base de données comprenant un système de gestion de base de données relationnelle, SGBDR, le procédé comprenant les étapes consistant à :
recevoir un objet source comprenant une instance d'une classe Java et un schéma de balisage source,
générer, dans un document en langage de balisage de destination comprenant un document XML, des informations d'instance XML et des champs de données lus à partir de l'objet source, appelées données de destination, sur la base de l'objet source et du schéma de balisage source reçus,
stocker des données de destination comprenant le document en langage de balisage de destination en association avec le schéma de balisage source dans une base de données,
dans lequel des objets sources d'une classe correspondent à des schémas de balisage partageant un seul et unique espace de noms XML, fournissant ainsi une correspondance bi-univoque entre la classe d'objets sources et l'espace de noms XML.

2. Procédé selon la revendication précédente, dans lequel des documents XML sont stockés comme instance XML convertie en un format binaire à stocker dans la base de données.

3. Procédé selon l'une quelconque des revendications précédentes, dans lequel le schéma de balisage source comprend des informations de Schéma XML (XSD).

4. Procédé selon la revendication précédente, dans lequel toutes les données de destination liées à un objet source sont représentées dans une seule colonne du SGBDR.

5. Système pour stocker des données relatives à des entités d'un modèle de domaine orienté objet dans une base de données comprenant un système de gestion de base de données relationnelle, SGBDR, le système comprenant :
des moyens pour recevoir un objet source comprenant une instance d'une classe Java et un schéma de balisage source,
des moyens pour générer, dans un document en langage de balisage de destination comprenant un document XML, des informations d'instance XML et des champs de données lus à partir de l'objet source, appelées données de destination, sur la base de l'objet source et du schéma de balisage source recevables,
des moyens pour stocker des données de destination comprenant le document en langage de balisage de destination en association avec le schéma de balisage source dans une base de données,
dans lequel des objets sources d'une classe correspondant à des schémas de balisage partageant un seul et unique espace de noms XML, fournissant ainsi une correspondance bi-univoque entre la classe d'objets sources et l'espace de noms XML.

6. Système selon la revendication 5, dans lequel le système est configuré pour mener les étapes énoncées dans au moins une des revendications 1 à 4.
